# EUROPÄISCHE PATENTSCHRIFT

(11) **EP 2 400 434 B1**
(45) Veröffentlichungstag und Bekanntmachung des Hinweises auf die Patenterteilung: **09.04.2014**
(21) Anmeldenummer: 11171549.6
(22) Anmeldetag: 27.06.2011
(51) Int. Cl.: G06K 19/04, H01R 33/00, G06K 19/077

(54) **Drehbar ein- und aussteckbarer Anschlussstecker für Einrichtungen, vorzugsweise im Kartenformat**
Rotatable connectable and disconnectable connector plug for devices, preferably in card format
Fiche de raccordement rotative à connexion et déconnexion pour dispositifs, de préférence en format carte

(30) Priorität: 28.06.2010 DE 202010009604 U
(43) Veröffentlichungstag der Anmeldung: 28.12.2011
(73) Patentinhaber: TOP.conduct GmbH, 80992 München (DE)
(72) Erfinder: Lauer, Hans-Martin, 80992 München (DE)
(74) Vertreter: Menges, Patrick

(56) Entgegenhaltungen:
- EP-A1- 1 865 446
- FR-A1- 2 644 268
- US-B1- 6 883 718

## Beschreibung

Die Erfindung betrifft eine Einrichtung der im Oberbegriff des Patentanspruches 1 angegebenen Art.

### Stand der Technik

Eine ähnliche Einrichtung, vorzugsweise im Kartenformat, mit einem Anschlussstecker mit elektrischen Kontaktflächen zum Austausch von digitalen Informationen, vorzugsweise zur Speicherung von Daten auf der Einrichtung, für den Anschluss an eine längsführende Anschlussbuchse, deren Anschlusskontakte auf einer Ebene parallel zur Ebene des eingeführten Anschlusssteckers liegen und mit der Daten und/oder eine Versorgungsspannung an ein externes Gerät übertragen werden können, ist aus dem Dokument DE 297 20 384 U1 bekannt.

Bekannt ist bereits aus den Dokumenten US 2006/0278723 A1 und US 7,377,448 B2 eine Kartenvorrichtung mit einem USB-Anschluss, der durch ein Heraus- oder Wegklappen aus dem Mittelteil oder einem Randbereich der Karte und ein Umklappen des vorderen Steckerteils in eine USB-Anschlussbuchse einsteckbar ist. Nachteilig bei einer derartigen Anordnung und Gestaltung des Anschlusssteckers ist, dass er bei ungünstigen Einbaulagen der Anschlussbuchse nicht eingesteckt werden kann. Dies ist beispielsweise oft bei tragbaren Computern, wie z.B. bei Notebooks, der Fall, da bei diesen die Anschlussbuchse oftmals nicht horizontal sondern vertikal eingebaut ist. Aber auch bei Desktop- oder Tower-Computern sind die Anschlussbuchsen nicht immer leicht zugänglich angeordnet, insbesondere für Anschlussstecker an kartenförmigen Geräten und Geräten mit größeren Abmessungen.

Ein ähnlicher Stand der Technik ist aus dem Dokument US 2006/0278723 A1 oder aus dem Dokument US 7,377,448 B2 bekannt.

Bekannt sind Flash-Speicher mit USB-Anschluss in verschiedenen Formen und Ausgestaltungen wie z.B. Schlüsselanhänger, Schreibstifte, Taschenmesser etc. Eine vorteilhafte Form für einen Flash-Speicher ist die Anbringung auf einer Plastikkarte, die in einer Brieftasche oder einem Geldbeutel mit Kreditkarten aufbewahrt und mitgeführt werden kann und über weitere Funktionen verfügt, beispielsweise als Kreditkarte oder Identifikationskarte.

Nach der USB-Spezifikation 2.0 hat ein Standardstecker vier Kontakt-Pins bzw. Kontaktflächen, eine für die Spannung von 5 Volt (Pin 1), die beiden mittleren für den Datentransfer (Pin 2 und 3), und eine für die Masse (Pin 4). Diese Kontakte haben festgelegte Abmessungen, damit ein Kontakt mit den Anschlusskontakten der Anschlussbuchse immer gewährleistet ist. Daher sind die Anschlusskontakte bislang stets als rechteckige Kontaktflächen mit geraden Konturen ausgestaltet worden. Dies erfordert jedoch immer ein gerades Einstecken des Anschlusssteckers. Aufgrund der jeweiligen Anordnung der Anschlussbuchse an dem externen Gerät ist jedoch ein geradliniges Einstecken des Steckers nicht immer möglich, insbesondere wenn der Anschlussstecker sich an einer Karteneinrichtung befindet.

Aus den Dokumenten US 2008/0087731 A1 und US 7,537,169 B2 sind Kartenvorrichtungen bekannt, bei denen der USB-Anschlussstecker aus einer Umhüllung der (Kredit-) Karte herausgedreht wird oder durch ein Wegklappen eines Teils der Karte freigelegt wird. Jedoch muss auch bei dieser Karte der Anschlussstecker gerade in die Anschlussbuchse gesteckt werden. Damit ist ein Einstecken einer solchen Vorrichtung in speziellen Einbausituationen der Buchse nicht möglich.

Aus dem eingangs bereits erwähnten Dokument DE 297 20 384 U1 ist eine Mini-Chipscheibe, funktionsgleich mit einer wechselbaren, kleinstformatigen Halbleiter-Speicherkarte für Telekommunikationsgeräte bekannt, auf die als universeller elektronischer Datenspeicher ohne jegliche bewegte Mechanik zugegriffen werden kann und die multimedial in Endgeräten wie Digitalkameras, Smarthandys oder mobilen Musikwiedergabegeräten einsetzbar ist, wobei der Scheibenkörper in runder Münzform und in Größe gängiger Münzzahlungsmittel ausgeführt ist, und über eine Anordnung der Kontakte auf seiner Oberfläche verfügt, die Zugriff auf den Speicher grundsätzlich nach Einführung in die jeweiligen Endgeräte herstellt, ohne dass irgendwelche Positionierungsvorkehrungen getroffen werden müssen, eine Handhabung beim Einführungsvorgang somit ungerichtet und blind erfolgen kann. Im Übrigen geht es bei diesem Gebrauchsmuster darum, die Minichipkarte, die hinsichtlich der Größe, Ausbildung, Handhabung und Formatierung ähnlich einer Telefonkarte ausgestaltet ist, mit ihrem länglichen Format gerichtet in einen Aufnahmeschlitz am Endgerät einzuschieben, wobei dann über sich dabei überlagernde Kontaktstellen Speicherzugriff ermöglicht wird. Schon bei der Nutzung von herkömmlichen großen Telefonkarten hätten sich in der Praxis immer wieder Handhabungsdefizite in der Form von dem Einfädeln der falschen Stirnseite oder dem durch Verkanten behinderten Einfädelvorgang ergeben.

Einen ähnlichen Stand der Technik zeigt das Dokument DE 295 15 557 U1. Es betrifft einen Chip mit radial symmetrischer Kontaktanordnung. Bei diesem Chip handelt es sich um einen Speicherchip üblicher Bauart, wie sie z.B. auf Telefonkarten oder Gesundheitskarten aufgebracht sind, zum Beschreiben und Auslesen von Daten, wobei die Anordnung der Kontakte radial symmetrisch ausgeführt ist und somit der Chip nicht zur Auslegemaschine hin ausgerichtet werden muss.

Die beiden letztgenannten Dokumente offenbaren zwar radial symmetrische Anordnungen der Kontakte und eine dadurch gegebene Möglichkeit eines verdrehten bzw. nicht ausgerichteten Ein- und Aussteckens, jedoch offenbaren sie nicht eine besondere Ausgestaltung des Anschlusssteckers. Vielmehr wird von einfach kreisrunden bzw. münzförmigen Anschlusssteckern ausgegangen.

Eine Einrichtung der im Oberbegriff des Patentanspruchs 1 angegebenen Art ist aus dem Dokument FR 2 644 268 A1 bekannt. Bei dieser bekannten Einrichtung handelt es sich um einen kreisförmigen Jeton mit wenigstens einem Chip einer integrierten Schaltung, deren Anschlusskontakte mit Kontaktzonen verbunden sind, welche auf einer Seite des Jetons vorhanden sind. Diese Kontaktzonen sind in Kreissektoren angeordnet, welche jeweils die gleiche Ausdehnung hat, wobei aber einer dieser Sektoren, der erste Sektor, bis zu einer Zone verlängert ist, welche das Zentrum des Jetons umfasst. Dieser Jeton wird beispielshalber in öffentlichen Telefonen eingesetzt. Er macht Kartentelefone überflüssig, weil er in den Münzschlitz eingeworfen wird, wo er wie eine elektronische Karte gelesen werden kann. Weil der Jeton vor dem Lesekopf in einer unbestimmten Drehposition ankommen wird, wird zunächst die Drehposition des Jetons bestimmt, die aufgrund der ermittelten Lage des verlängerten Kreissektors definiert werden kann, ohne dass der Jeton dazu in eine andere Position verdreht werden müsste.

### Aufgabe der Erfindung

Aufgabe der vorliegenden Erfindung ist es, eine Einrichtung der eingangs genannten Art so auszubilden, dass die Einrichtung auch bei ungünstigen Lagen verdreht ein- und ausgesteckt werden kann.

### Lösung

Die Aufgabe wird erfindungsgemäß gelöst durch die im Anspruch 1 angegebenen Merkmale.

### Erreichte Vorteile

Eine Grundplatte der Einrichtung nach der Erfindung besteht, wenn diese Kartenformat aufweist, aus einem Stück und kann durch Stanzen, Bedrucken und/oder Bekleben hergestellt werden. Vorzugsweise weist die Karteneinrichtung einen USB-Anschlussstecker auf, der passend für Buchsen gemäß den USB-Spezifikationen 2.0, Buchsentyp "A", Spezifiaktionen erhältlich unter http://ww.usb.org./developers/docs, ausgestaltet ist. Bei dieser Ausgestaltung weist der Anschlussstecker jedenfalls vier Kontaktflächen auf, die in der Form von Kreissegmenten um die Mittellage angeordnet sind und Abmessungen haben, die geeignet sind, mit einer USB-Buchse vom Typ "A" sicheren Kontakt herzustellen.

Ein wesentlicher Vorteil der Erfindung ist, dass die Karte in eingestecktem Zustand um eine zur Steckebene senkrechte Achse um eine Mittellage gedreht werden kann sowie auch in verschiedenen Winkeln um die Mittellage verdreht ein- und ausgesteckt werden kann.

Ein weiterer Vorteil wird darin gesehen, dass dadurch ein Ein- und Ausstecken der Karte auch bei relativ ungünstiger Anordnung der Anschlussbuchse des externen Geräts erfolgen kann, insbesondere bei tragbaren Computern und einer vertikalen Anordnung der USB-Anschlussbuchse.

Erfindungsgemäß weist die Trägerplatte der Karteneinrichtung die Form und die Dicke einer Standardkreditkarte auf. Um eine größtmögliche Verdrehung der Karten sowohl in eingestecktem Zustand als auch ein Ein- und Ausstecken in verdrehtem Zustand zu ermöglichen weist die Karte auf der Längsseite und/oder der Querseite Aussparungen auf.

Weitere sind erfindungsgemäß die Kontaktflächen längs erweitert. Die Kreissegmente weisen jeweils eine gerade Verlängerung auf. Dadurch wird erreicht, dass eine Verdrehung auch in nicht ganz eingestecktem Zustand möglich ist und dennoch die Kontaktflächen mit den Kontakten der Anschlussbuchse verbunden sind. Dies ist von Vorteil, wenn der Anschlussstecker aufgrund von in die Anschlussbuchse eingedrungenem Fremdmaterial, Fremdkörpern oder sonstigen Verunreinigungen nicht vollständig eingesteckt werden kann.

Vorteilhafte Ausgestaltungen der Erfindung bilden die Gegenstände der abhängigen Ansprüche.

In einer vorteilhaften Ausgestaltung sind die Kontaktflächen beliebig innerhalb einer noch freien Fläche des Anschlusssteckers vergrößert. Dadurch können die Anschlusskontakte der Anschlussbuchse andere Abstände voneinander haben als durch die USB-Spezifikation vorgesehen. Dadurch ist der Kontakt auch bei solchen USB-Buchsen sichergestellt, die von der USB-Spezifikation in gewissen Grenzen abweichen.

In einer weiteren vorteilhaften Ausgestaltung weisen die äußeren Kreissegmente Längserweiterungen auf, die ein größeres Maß als die Längserweiterungen der Kreissegmente der inneren Kontaktflächen haben. Dadurch bleiben die äußeren Kontaktflächen beim Ausstecken des Anschlusssteckers länger in Kontakt mit den Anschlusskontakten der Anschlussbuchse als die inneren Kontaktflächen. Beim Einstecken haben die äußeren Kontaktflächen früher Kontakt als die inneren Kontaktflächen. Diese Eigenschaft ist vorteilhaft für die Stromversorgungskontakte eines Mikroprozessors, der mit Spannung zu versorgen ist, bevor seine Datenanschlüsse mit Logikpegeln beaufschlagt werden dürfen.

Ausführungsbeispiele der Erfindung werden im Folgenden unter Bezugnahme auf die Zeichnung näher beschrieben. Es zeigt:

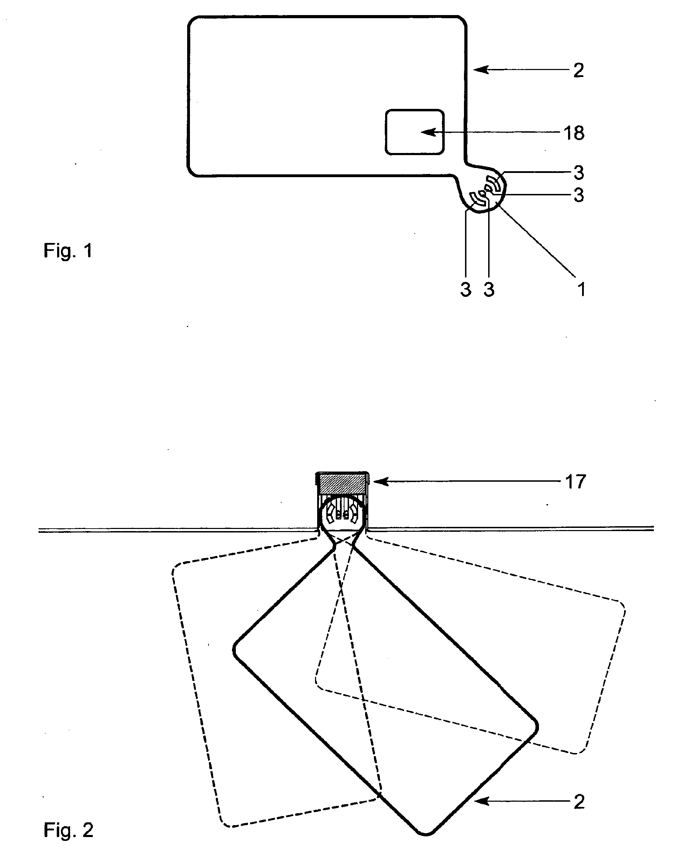

Fig. 1 eine Draufsicht einer Karteneinrichtung in einem kleineren Format als das bekannte Kreditkartenformat, mit vier Anschlusskontakten (3) und einem aus mehreren Kreissegmenten bestehenden Anschlussstecker (1);
Fig. 2 eine schematische Draufsicht der Kartenrichtung nach Fig. 1 und einer Anschlussbuchse (17) mit den möglichen Verdrehungen der Karteneinrichtung in eingestecktem Zustand;

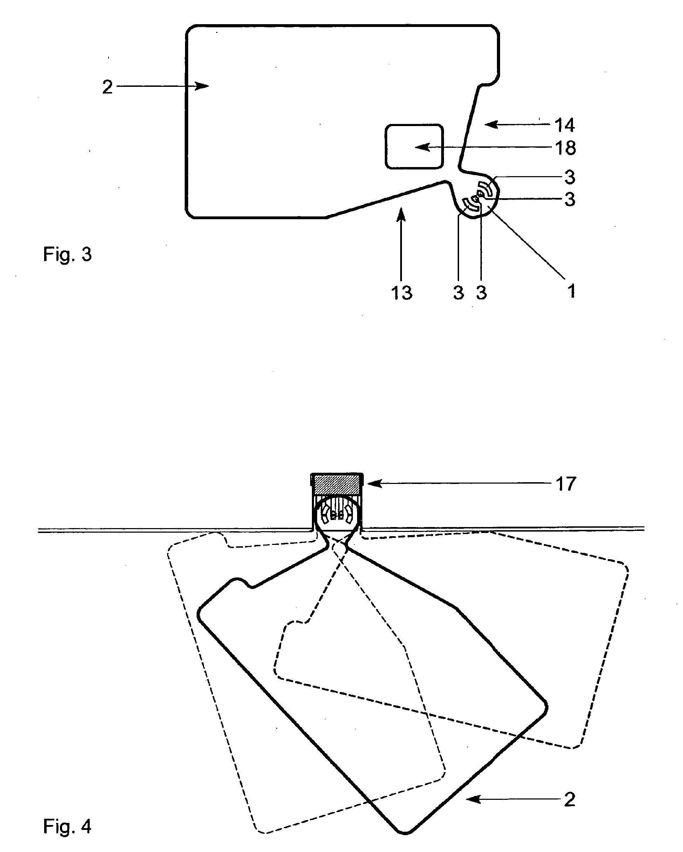

Fig. 3 eine Draufsicht der Karteneinrichtung im Standard-Kreditkartenformat mit vier Anschlusskontakten (3), dem aus mehreren Kreissegmenten bestehenden Anschlussstecker (1) und den Aussparungen auf der Längsseite der Karte (13) und auf der Querseite der Karte (14);
Fig. 4 eine schematische Draufsicht der Karteneinrichtung nach Fig. 3 und der Anschlussbuchse (17) mit den möglichen Verdrehungen der Karteneinrichtung in eingestecktem Zustand;

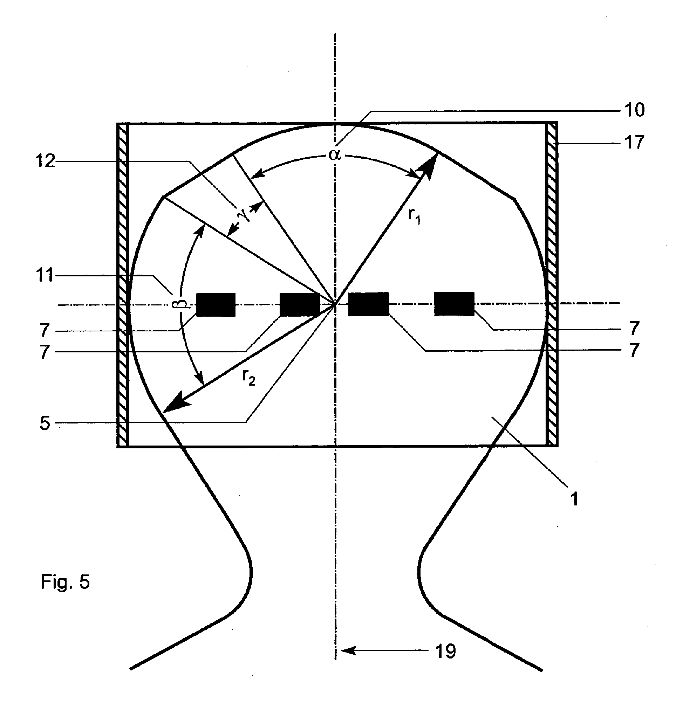

Fig. 5 eine schematische Draufsicht des Anschlusssteckers (1) in eingestecktem Zustand bestehend aus dem mittleren Kreissegment (10) mit einem ersten Radius (r₁) und einem ersten Mittelpunktswinkel (α), den beiden äußeren Kreissegmenten (11) mit jeweils einem zweiten Raduis (r₂) und einem zweiten Mittelpunktswinkel (β) sowie den zwischen diesen Kreissegmenten liegenden Dreiecken (12) mit einem dritten Mittelpunktswinkel (γ) und mit vier Anschlusskontakten (7) der Anschlussbuchse (17);

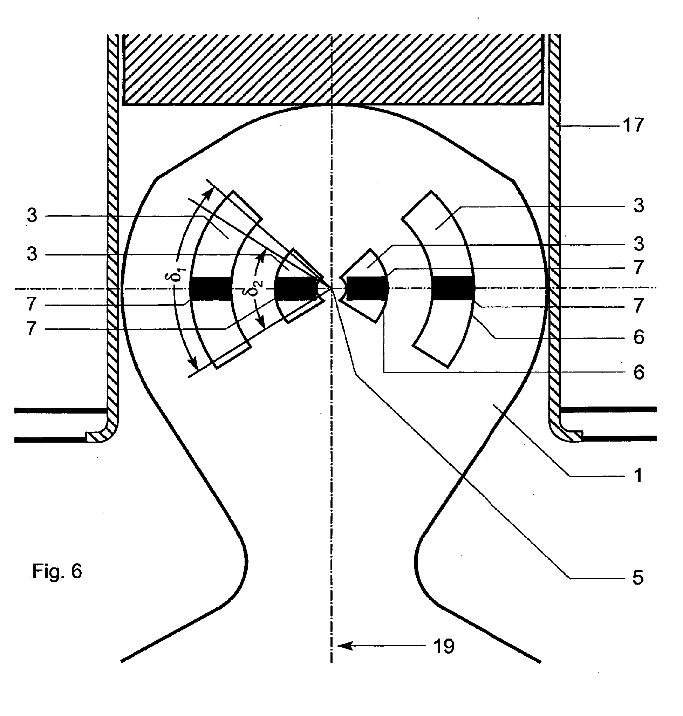

Fig. 6 eine schematische Draufsicht des Anschlussstecker (1) in eingestecktem Zustand mit vier Kontaktflächen (3), die in der Form von Kreissegmenten rotationssymetrisch um die Mittel-lage (5) des Anschlusssteckers (1) angeordnet sind, und mit vier Anschlusskontakten (7) der Anschlussbuche (17);

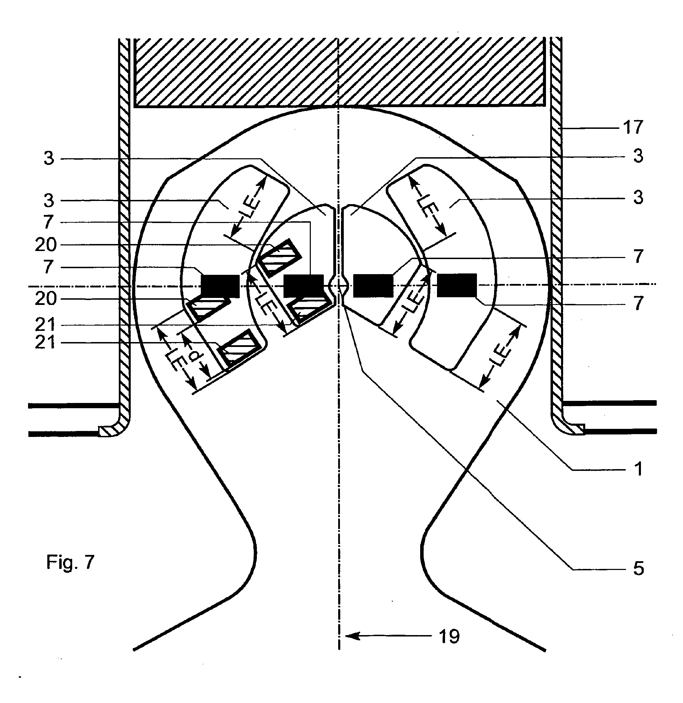

Fig. 7 eine schematische Draufsicht des Anschlusssteckers (1) in eingestecktem Zustand mit vier Kontaktflächen (3), die in Form von Kreissegmenten rotationssymetrisch um die Mittellage (5) des Anschlusssteckers (1) angeordnet sind und deren Kreissegmente mit geraden Verlängerungen (LE) längs erweitert sind, sowie mit vier Anschlusskontakten (7) der Anschlussbuchse (17);

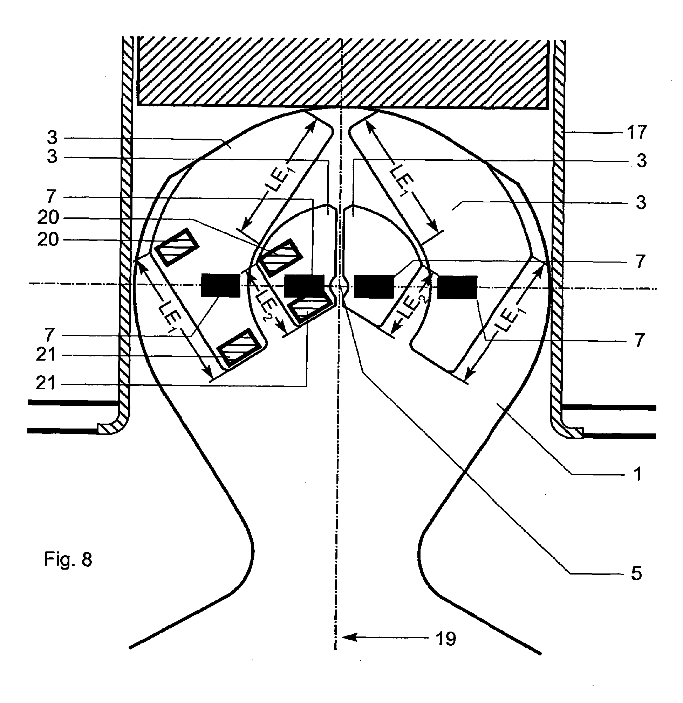

Fig. 8 eine schematische Draufsicht des Anschlusssteckers (1) in eingestecktem Zustand mit vier Kontaktflächen (3) wobei die Kreissegmente der äußeren Kontaktflächen (3) mit geraden Erweiterungen (LE₁) um ein größeres Maß längs erweitert sind als die Kreissegmente der inneren Kontaktflächen (3) mit kürzeren geraden Erweiterungen (LE₂).; und

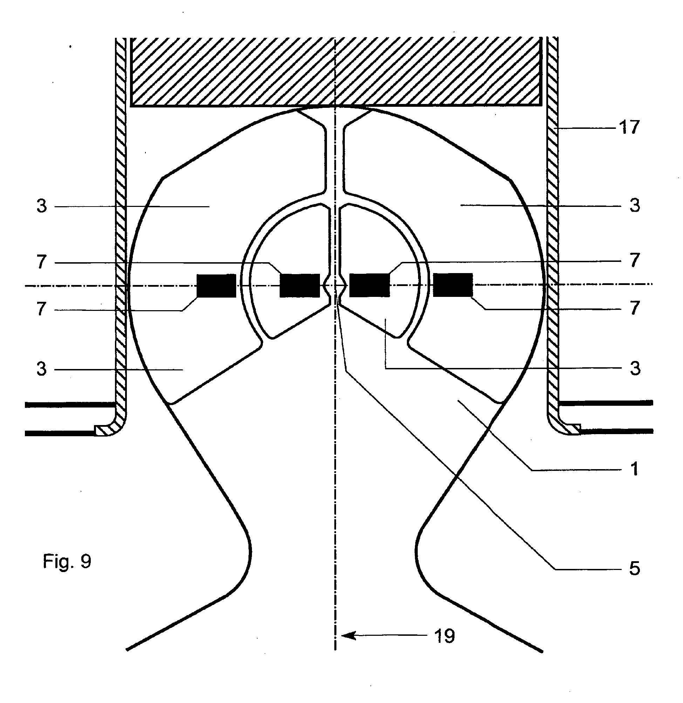

Fig. 9 eine schematische Draufsicht des Anschlusssteckers (1) in eingestecktem Zustand mit vier Kontaktflächen (3), die beliebig innerhalb der noch freien Fläche des Anschlusssteckers (1) vergrößert sind, und mit vier Anschlusskontakten (7) der Anschlussbuchse (17).

Die vorliegende Erfindung betrifft eine Karteneinrichtung für den Anschluss an eine längsgeführte Anschlussbuchse, deren Anschlusskontakte 7 auf einer Ebene parallel zur Ebene des eingeführten Anschlusssteckers 1 liegen und mit der Daten und/oder eine Versorgungsspannung an ein externes Gerät übertragen werden können. Vorzugsweise weist die Karteneinrichtung die Länge und Breite einer Kreditkarte auf (ca. 85 mm x 54 mm), so dass sie einfach in eine Brieftasche oder einen Geldbeutel passt und auf diese Weise geschützt transportiert und mit sich geführt werden kann. Vorzugsweise liegt die Dicke der Kreditkarte bei ca. 0,8 mm, jedenfalls aber zwischen 0,5 - 0,9 mm, wobei der Anschlussstecker 1 im Bereich der Anschlusskontakte 3 jedenfalls eine Dicke von ca. 1,7 mm aufweisen sollte gemäß den USB-Spezifikationen. Ferner weist die Karteneinrichtung vorzugsweise einen Flash-Speicher 18 mit entsprechender Kontrolleinheit (sog. Controller) 4 und/oder einen Anschlussstecker 1 auf, der kompatibel zu einer USB-Anschlussbuchse ist. Die elektrischen Kontakte sind gemäß den USB-Spezifikationen auf der flachen Oberseite des Anschlusssteckers angeordnet. Auf die USB-Spezifikationen wird hiermit vollinhaltlich Bezug genommen. Gemäß der spezifizierten Abmessungen einer USB-Buchse vom Typ "A" sollte der Radius r₁ des Anschlusssteckers 1 vorzugsweise 5,66 mm zu betragen und der ein Radius r₂ des Anschlusssteckers vorzugsweise 6,2 mm. Das mittlere Kreissegment 10 mit dem Mittelpunktswinkel α erstreckt sich vorzugsweise von der Längsachse um 33° jeweils zur linken und zur rechten Steckerseite. Im Anschluss daran liegen jeweils die Dreiecke 12 mit dem Mittelpunktswinkel γ und daran anschließend die beiden äußeren Kreissegmente 11 mit dem Mittelpunktswinkel β. Die Winkel α und β haben vorzugsweise 66°. Der Winkel γ hat vorzugsweise 24°.

Die Kreisbogensegmente der Kontaktflächen 3 haben vorzugsweise Kreisbogenlängen 6, die sich aus einem Rotationswinkel δ von vorzugsweise 90° ergeben. In einer vorteilhaften Ausführungsform ist der Rotationswinkel des äußeren Kreisbogensegments δ₁ größer als der des inneren Kreisbogensegments δ₂. Bei einer weiteren Ausführungsform sind die Kreissegmente längs mittels gerader Verlängerungen LE erweitert, so dass die Kontaktflächen 7 des Anschlusssteckers 1 auch in nicht vollständig eingesteckten Zustand Kontakt zu den Anschlusskontakten 7 haben und der Anschlussstecker 1 verdreht werden kann sowie verdreht ein- und ausgesteckt werden kann. Bei einer weiteren vorteilhaften Ausführungsform sind die beiden äußeren Kreissegmente mit LE₁ um ein größeres Maß längs erweitert als die inneren Kreissegmente mit einer Längserweiterung LE₂. Dadurch wird gewährleistet, dass die äußeren Kontaktflächen 3 beim Ausstecken länger Kontakt halten als die inneren Kontaktflächen 3 sowie beim Einstecken früheren Kontakt haben.

### Bezugszeichenliste

1 Anschlussstecker
2 Karteneinrichtung
3 Elektrische Kontaktflächen
4 Kontrolleinheit, Controller
5 Mittellage bzw. Drehpunkt
6 Kreisbogenlängen der Kreissegmente der Kontaktflächen (3)
7 Anschlusskontakte
8 Kontrolleinheit
9 Speicher, z.B. Flash-Speicher
10 Mittleres Kreissegment mit einem ersten Radius (r₁) und einem ersten Mittelpunktswinkel (α)
11 Äußeres Kreissegment mit einem zweiten Radius (r₂) und einem zweiten Mittelpunktswinkel (β)
12 Dreieck mit einem dritten Mittelpunktswinkel (γ) zwischen dem mittleren Kreissegment (10) und den beiden äußeren Kreissegmenten (11)
13 Aussparung auf der Längsseite der Karte
14 Aussparung auf der Querseite der Karte
15 Längserweiterung LE₁
16 Längserweiterung LE₂
17 Anschlussbuchse
18 Flash-Speicher
19 Symmetrieachse
20 Möglicher Kontaktbereich auf der linken Anschlusssteckerseite einer Einsteckposition um 33° nach links verdreht und nicht vollständig eingesteckt
21 Möglicher Kontaktbereich auf der linken Anschlusssteckerseite einer Einsteckposition um 33° nach links verdreht und vollständig eingesteckt

## Patentansprüche

1. Einrichtung, vorzugsweise im Kartenformat, mit einem Anschlussstecker (1) mit elektrischen Kontaktflächen (3) zum Austausch von digitalen Informationen, vorzugsweise zur Speicherung von Daten auf der Einrichtung, für den Anschluss an eine längsführende Anschlussbuchse, deren Anschlusskontakte (7) auf einer Ebene parallel zur Ebene des eingeführten Anschlusssteckers (1) liegen und mit der Daten und/oder eine Versorgungsspannung an ein externes Gerät übertragen werden können, wobei der Anschlussstecker (1) so ausgebildet ist, dass er in eingestecktem Zustand und während des Ein- oder Aussteckens um eine zu einer Steckebene senkrechte Achse in einem Winkel von +/- 5° bis +/- 33° um eine Mittellage (5) gedreht werden kann bzw. in verschiedenen Winkeln um die Mittellage (5) verdreht ein- und ausgesteckt werden kann, wobei die äußere Form des Anschlusssteckers (1) aus einem mittleren Kreissegment (10) mit einem ersten Radius r₁ und einem ersten Mittelpunktswinkel α sowie zwei äußeren Kreissegmenten (11) mit jeweils einem zweiten Radius r₂ und einem zweiten Mittelpunktswinkel β besteht und von den elektrischen Kontaktflächen (3) des Anschlusssteckers (1) wenigstens zwei Kontaktflächen (3) in der Form von Kreissegmenten rotationssymmetrisch um die Mittellage (5) des Anschlusssteckers (1) angeordnet sind und diese Kreissegmente (3) vorzugsweise Kreisbogenlängen (6) haben, die sich aus einem Rotationswinkel δ, δ₁, δ₂ von wenigstens 10° bis 90° ergeben,
**dadurch gekennzeichnet, dass** zwischen den beiden äußeren Kreissegmenten (11) zwei Dreiecke (12) mit einem dritten Mittelpunktswinkel (γ) liegen, dass die Einrichtung eine Karteneinrichtung (2) im Kreditkartenformat ist und auf der Längsseite eine Aussparung (13) und/oder auf der Querseite eine Aussparung (14) aufweist, dass als elektrische Kontaktflächen (3) wenigstens vier Kontaktflächen (3) vorhanden sind und dass die Kontaktflächen (3) als längs erweiterte Kreissegmente ausgestaltet sind, wobei obere und untere Anschlusskanten der Kreissegmente in gerader Linie nach vorne verlängert LE bzw. mit einem Kreisbogensegment verbunden sind, um eine Verdrehung des Anschlusssteckers (1) auch in nicht vollständig eingestecktem Zustand zu gewährleisten.

2. Einrichtung nach Anspruch 1, **dadurch gekennzeichnet, dass** der Anschlussstecker (1) kompatibel zu einer USB-Anschlussbuchse ist und vier Konktaktflächen (3) aufweist, wobei diese vier Kontaktflächen (3) in der Form von Kreissegmenten angeordnet sind.

3. Einrichtung nach Anspruch 1 oder 2, **dadurch gekennzeichnet, dass** die beiden Mittelpunktswinkel α, β der Kreissegmente (10, 11) zur Bildung der äußeren Form des Anschlusssteckers (1) gleich groß sind.

4. Einrichtung nach Anspruch 2 oder 3, **dadurch gekennzeichnet, dass** die beiden Dreiecke (12) zwischen den beiden Kreissegmenten (10, 11) rechtwinklige Dreiecke sind, wodurch ein maximaler Drehwinkel des Anschlusssteckers (1) um die Mittellage (5) erzielt wird.

5. Einrichtung nach Anspruch 1 oder 2, **dadurch gekennzeichnet, dass** die Radien r₁, r₂ der Kreissegmente (10, 11) gleich groß sind und die Mittelpunktswinkel α, β der Kreissegmente (10, 11) 90° betragen.

6. Einrichtung nach einem der Ansprüche 1 bis 5, **dadurch gekennzeichnet, dass** die Kreissegmente von äußeren Kontaktflächen (3) mittels gerader erster Erweiterungen LE₁ um ein größeres Maß längs erweitert sind als die Kreissegmente von inneren Kontaktflächen (3) mit geraden zweiten Erweiterungen LE₂, um sicherzustellen, dass die äußeren Kontaktflächen (3) beim Einstecken früher Kontakt haben und beim Ausstecken länger Kontakt halten als die inneren Kontaktflächen (3).

7. Einrichtung nach einem der Ansprüche 1 bis 6, **dadurch gekennzeichnet, dass** die Flächen der Kreissegmente (3) innerhalb einer noch freien Fläche des Anschlusssteckers (1) beliebig groß erweitert sind, wobei die Erweiterungen nicht über eine Symmetrieachse (19) hinausgehen.

## Claims

1. A device, preferably in card format, with a connector plug (1) with electrical contact surfaces (3) for the exchange of digital information, preferably for the storage of data on the device, for connection to a longitudinally guiding connection socket, the connecting contacts (7) of which lie on a plane parallel to the plane of the inserted connector plug (1) and with which data and/or a supply voltage can be transmitted to an external apparatus, wherein the connector plug (1) is constituted such that, in the plugged-in state as well as during plugging-in or unplugging, it can be rotated around an axis normal to a plug-in plane at an angle of ± 5° to ± 33° around a central position (5), or it can be plugged in and unplugged in a rotated position at various angles around the central position (5), wherein the external shape of the connector plug (1) comprises a central circular segment (10) with a first radius r₁ and a first centre-point angle α as well as two outer circular segments (11) each with a second radius r₂ and a second centre-point angle β, and wherein of the electrical contact surfaces (3) of the connector plug (1), at least two contact surfaces (3) in the form of circular segments are disposed rotation-symmetrical around the central position (5) of the connector plug (1) and these circular segments (3) preferably have circular arc lengths (6) which result from an angle of rotation δ, δ₁, δ₂ of at least 10° to 90°, **characterised in that** two triangles (12) with a third centre-point angle (γ) lie between the two outer circular segments (11), that the device is a card device (2) in credit card format and comprises a cutout (13) on the longitudinal side and/or a cutout (14) on the transverse side, that at least four contact surfaces (3) are present as electrical contact surfaces (3) and that the contact surfaces (3) are constituted as longitudinally extended circular segments, wherein upper and lower connection edges of the circular segments are extended in a straight line forwards LE or are connected to a circular arc segment, in order to ensure a rotation of the connector plug (1) also in an incompletely plugged-in state.

2. The device according to claim 1, **characterised in that** the connector plug (1) is compatible with a USB connection socket and comprises four contact surfaces (3), wherein these four contact surfaces (3) are disposed in the form of circular segments.

3. The device according to claim 1 or 2, **characterised in that** the two centre-point angles α, β of the circular segments (10, 11) for the formation of the external shape of the connector plug (1) are of equal size.

4. The device according to claim 2 or 3, **characterised in that** the two triangles (12) between the two circular segments (10, 11) are rectangular triangles, as a result of which a maximum angle of rotation of the connector plug (1) around the central position (5) is achieved.

5. The device according to claim 1 or 2, **characterised in that** the radii r₁, r₂ of the circular segments (10, 11) are of equal size and the centre-point angles α, β of the circular segments (10, 11) amount to 90°.

6. The device according to any one of claims 1 to 5, **characterised in that** the circular segments of outer contact surfaces (3) are widened longitudinally by means of straight first extensions LE₁ to a greater extent than the circular segments of inner contact surfaces (3) with straight second extensions LE₂, in order to ensure that the outer contact surfaces (3) have earlier contact during plugging-in and maintain longer contact during unplugging than the inner contact surfaces (3).

7. The device according to any one of claims 1 to 6, **characterised in that** the areas of the circular segments (3) are widened to any desired extent within an area of the connector plug (1) that is still free, wherein the extensions do not go beyond an axis of symmetry (19).

## Revendications

1. Dispositif, de préférence au format d'une carte, avec une fiche de raccordement (1) ayant des surfaces de contact électriques (3) pour l'échange d'informations numériques, de préférence pour la mémorisation de données sur le dispositif, pour le raccordement à une prise de raccordement à guidage longitudinal, dont les contacts de raccordement (7) sont situés sur un plan parallèlement au plan de la fiche de raccordement (1) introduite, et avec laquelle des données et/ou une tension d'alimentation peuvent être transmises à un appareil externe, la fiche de raccordement (1) étant conçue de sorte que, dans l'état insérée et durant l'insertion ou la désinsertion, elle puisse être pivotée autour d'un axe perpendiculaire au plan d'insertion selon un angle de ± 5° à ± 33° autour de la position centrale (5) respectivement être insérée ou désinsérée en étant tournée selon différents angles autour de la position centrale (5), la forme externe de la fiche de raccordement (1) étant composée d'un arc de cercle central (10) ayant un premier rayon r₁ et un premier angle de point central α ainsi que de deux segments de cercle externes (11) ayant chacun un deuxième rayon r₂ et un deuxième angle de point central β et au moins deux surfaces de contact (3) parmi les surfaces de contact électriques (3) de la fiche de raccordement (1), sous la forme de segments de cercle, étant disposées selon une symétrie de rotation autour de la position centrale (5) de la fiche de raccordement (1) et ces segments de cercle (3) ayant de préférence des longueurs d'arc de cercle (6) qui résultent d'un angle de rotation δ, δ₁, δ₂ d'au moins 10° à 90°, **caractérisé en ce que** deux triangles (12) ayant un troisième angle de point central (γ) sont situés entre les deux segments de cercle externes (11), **en ce que** le dispositif est un dispositif de carte (2) au format d'une carte de crédit et présente sur le côté longitudinal un dégagement (13) et/ou sur le côté transversal un dégagement (14), **en ce qu'**au moins quatre surfaces de contact (3) sont présentes en tant que surfaces de contact (3) électriques et **en ce que** les surfaces de contact (3) sont conçues en tant que segments de cercle étendus en longueur, des bords de raccordement supérieur et inférieur des segments de cercle étant prolongés en ligne droite vers l'avant LE respectivement étant reliés à un segment d'arc de cercle afin de garantir un pivotement de la fiche de raccordement (1) également dans un état non complètement inséré.

2. Dispositif selon la revendication 1, **caractérisé en ce que** la fiche de raccordement (1) est compatible avec une prise de raccordement USB et comprend quatre surfaces de contact (3), ces quatre surfaces de contact (3) étant disposées en forme de segments de cercle.

3. Dispositif selon la revendication 1 ou 2, **caractérisé en ce que** les deux angles de point central α, β des segments de cercle (10, 11) sont de la même taille pour réaliser la forme externe de la fiche de raccordement (1).

4. Dispositif selon la revendication 2 ou 3, **caractérisé en ce que** les deux triangles (12) entre les deux segments de cercle (10, 11) sont des triangles rectangles par le biais desquels on obtient un angle de pivotement maximal de la fiche de raccordement (1) autour de la position centrale (5).

5. Dispositif selon la revendication 1 ou 2, **caractérisé en ce que** les rayons r_{1,} r₂ des segments de cercle (10, 11) sont de même taille et les angles de point central α, β des segments de cercle (10, 11) sont égaux à 90°.

6. Dispositif selon l'une quelconque des revendications 1 à 5, **caractérisé en ce que** les segments de cercle des surfaces de contact (3) externes sont étendus en longueur au moyen de premières extensions droites LE₁ d'une taille plus grande que les segments de cercle des surfaces de contact (3) internes ayant des deuxièmes extensions droites LE₂ afin d'assurer que les surfaces de contact (3) externes aient plus tôt un contact lors de l'insertion et maintiennent plus longtemps le contact lors de la désinsertion que les surfaces de contact (3) internes.

7. Dispositif selon l'une quelconque des revendications 1 à 6, **caractérisé en ce que** les surfaces des segments de cercle (3) sont étendues à une grandeur quelconque à l'intérieur d'une surface encore libre de la fiche de raccordement (1), les extensions n'allant pas au-delà d'un axe de symétrie (19).
